Europäisches Patentamt

European Patent Office

Office européen des brevets

(11) Veröffentlichungsnummer: **0 254 870 B1**

(12) **EUROPÄISCHE PATENTSCHRIFT**

(45) Veröffentlichungstag der Patentschrift: **04.03.92**

(21) Anmeldenummer: **87109059.3**

(22) Anmeldetag: **24.06.87**

(51) Int. Cl.⁵: **C09K 3/10**, F16J 15/00

(54) Verfahren zum Versiegeln einer Falzverbindung.

(30) Priorität: **28.06.86 DE 3621758**

(43) Veröffentlichungstag der Anmeldung:
**03.02.88 Patentblatt 88/05**

(45) Bekanntmachung des Hinweises auf die
Patenterteilung:
**04.03.92 Patentblatt 92/10**

(84) Benannte Vertragsstaaten:
**DE ES FR GB IT SE**

(56) Entgegenhaltungen:
**DE-A- 3 238 651**
**DE-A- 3 540 520**

(73) Patentinhaber: **Bayerische Motoren Werke Aktiengesellschaft**
**Patentabteilung AJ-30 Postfach 40 02 40 Petuelring 130**
**W-8000 München 40(DE)**

(72) Erfinder: **Thalmeier, Wolfgang**
**Niblerstrasse 35**
**W-8031 Eichenau(DE)**

Rank Xerox (UK) Business Services

**Beschreibung**

Die Erfindung bezieht sich auf ein Verfahren der im Oberbegriff des ersten Anspruchs angegebenen Art.

Die DE-PS 32 38 651 beschreibt beispielsweise das gattungsgemäße Verfahren. Es wird hauptsächlich bei Kraftfahrzeugteilen, wie Türne, Kofferraumhauben, Rückwandklappen etc. angewendet, um das Innenblech mit dem Außenblech zu verbinden. Als Klebstoffe kommen vornehmlich PVC-Plastisole, Acrylat-Plastisole, Epoxiharze oder Kunstkautschuke in Betracht.

Fertigungstechnisch ist est unmöglich, mit einem vertretbaren Aufwand den Falzspalt vollständig mit Klebstoff auszufüllen. Darüber hinaus öffnet sich aufgrund der elastischen Eigenschaft der Bleche nach dem Bördeln der umgebördelte Teil der Falzverbindung um bis zu 1 mm. Dadurch werden Hohlräume geschaffen, die bei dem Auftragen der Versiegelungsschicht auf die freie Schnittkante der Falzverbindung abgedichtet werden. Wird nun zum Vorgelieren eine derartige Falzverbindung erwärmt, so expandiert die eingeschlossene Luft im Bördelflansch. Darüber hinaus kann es auch zu Entgasungserscheinungen des Klebstoffs kommen. Beide Vorgänge bewirken, daß in der Versiegelungsschicht geschlossene oder sogar offene Blasen gebildet werden. Die geschlossenen Blasen beeinträchtigen die optische Qualität, die offenen rufen zusätzlich Falz korrosion hervor.

Um hier Abhilfe zu schaffen, schlägt die gattungsbildende DE-PS 32 38 651 vor, zuerst die Versiegelungsschicht vorzugelieren und dann erst eine Vorgelierung des Klebstoffs in der Bördelnaht durchzuführen. Dieser Lehre liegt der Gedanke zugrunde, daß durch das Vorgelieren der Versiegelungsschicht die beim Vorgelieren des Bördelnahtklebers entstehende Gasbildung und expandierende Lufteinschlüsse durch die bereits vorgelierte Versiegelungsschicht nicht mehr nach außen dringen können. Dadurch wird die Blasenbildung innerhalb der Versiegelungsschicht unterdrückt.

Nachteilig ist es jedoch bei diesem Verfahren, daß - da die expandierende Luft und die Gaseinschlüsse nicht mehr durch die Versiegelungsschicht nach außen dringen können - diese durch den Klebstoff nach innen in den Hohlraum zwischen Innenblech und Außenblech dringen. Dadurch werden zwischen den zu verbindenden Blechen Kanäle geschaffen, die zwar optisch nicht mehr stören, die aber ebenfalls noch zu Falzkorrosion führen können, indem Schwitzwasser, das sich in dem vom Innen- und Außenblech eingeschlossenen Hohlraum bildet, in die Falzverbindung eindringen und diese - von außen unsichtbar - zerstören.

Aufgabe der vorliegenden Erfindung ist es, das gattungsgemäße Verfahren dahingehend zu verbessern, daß eine optisch und qualitativ einwandfreie Falzverbindung hergestellt wird. Diese Aufgabe wird erfindungsgemäß durch die kennzeichnenden Merkmale des ersten Anspruchs gelöst. Die Erfindung basiert auf der Erkenntnis, daß bei einem Auftragen des Versiegelungsmaterials auf die auf Geliertemperatur erwärmte Falzverbindung die in der Falzverbindung vorhandene Luft bereits expandiert ist bzw. durch die Erwärmung der Klebstoff bereits entgasen kann. Die Entgasung bzw. die Expansion der Luft geschieht hierbei durch die noch freie Schnittkanten der Falzverbindung, so daß der von dem Innen- und Außenblech eingeschlossene Hohlraum zur Falzverbindung hin dicht bleibt. Wird nun auf die derart erwärmte Falzverbindung die Versiegelungsschicht aufgebracht, so bleibt diese optisch einwandfrei. Es werden weder Blasen eingeschlossen noch bilden sich offene Blasen, so daß auch keine Falzkorrosion mehr auftreten kann.

Da während des Auftragens der Versiegelungsschicht die Falzverbindung leicht abkühlt, wird zur Vorgelierung der Versiegelungsschicht die Weiterbildung nach Anspruch 2 vorgeschlagen. Die sich dann anschließende Abkühlung der Falzverbindung bewirkt, daß sich die zwischen der Versiegelungsschicht und dem Bördelnahtkleber eingeschlossene Luft volumenmäßig verkleinert, so daß - je nach Konsistenz des Klebers bzw. der Versiegelungsschicht - diese sogar noch in diese Hohlräume hineingezogen wird und teilweise ausfüllt. Die dann später stattfindende Aushärtung - überlicherweise während des späteren Lacktrocknungsprozesses - kann dann auf gar keinen Fall mehr zur Blasenbildung führen.

Je nach Art der Wärmezufuhr kann alternativ die Weiterbildung nach Anspruch 3 vorgesehen werden. Hierdurch läßt sich eine Zeiteinsparung erzielen, da keine Abkühl- und Aufheizphase durchlaufen werden muß.

Die Weiterbildung nach den kennzeichnenden Merkmalen des Anspruchs 4 beschreibt eine fertigungstechnisch bevorzugte Art der Erwärmung. Insbesondere ist es hierdurch möglich, den gesamten Erwärmungsvorgang - Bauteil vorwärmen und Versiegelungsmaterial gelieren - an einer Station mit dem Auftrag der Versiegelungsschicht vorzunehmen.

Zur Veranschaulichung des erfindungsgemäßen Verfahrens wird es am nachfolgenden Beispiel nochmals erläutert. Zuerst wird eines der fertiggeformten und zu verbindenden Bleche in einer Kleberauftragstation mit Klebstoff versehen. Sodann werden diese Bleche zusammengefügt und zu einem die Bördelnaht herstellenden Werkzeug transportiert. Anschließend wird die Bördelnaht induktiv auf 220 ˚C erwärmt. Hierzu benötigt man in der Regel eine Aufheizzeit von 6 - 20 sec. Sodann wird das Aufheizen unterbrochen und die Versiegelungsschicht wird aufgetragen. Dies sollte innerhalb von 20 sec. geschehen, da sonst die zu starke Abkühlung der Falzverbindung das Herstellen einer einwandfreien Versiegelung verhindert. Anschließend wird nochmals eine Wärmezufuhr durchgeführt, um eine Gelierung der Versiegelungsschicht zu erreichen. Hierbei hat sich eine Wärmezufuhr von 9 sec. bei einer Bauteiltemperatur von 180° als ausreichend erwiesen.

Je nach Ausgestaltung des Induktionswerkzeuges kann es auch möglich sein, die Falzverbindung nach Erreichen der Geliertemperatur auf dieser zu halten und gleichzeitig die Versiegelungsschicht aufzutragen. Hierbei entfällt dann die zeitliche Begrenzung für das Auftragen der Versiegelungsschicht. In diesem Fall, besteht die zweite Wärmezufuhr darin, die Wärmezufuhr noch ca. 9 sec. nach dem Auftragsende der Versiegelungsschicht zu halten.

**Patentansprüche**

1. Verfahren zum Abdichten einer Falzverbindung mittels eines durch Wärmezufuhr gelier- und/oder härtbaren Bördelnahtklebers im Falzspalt und einer dieser vorgeschalteten Versiegelungsschicht, die aus durch Wärmezufuhr gelier- und/oder härtbaren Material besteht und auf die Schnittkante der Falzverbindung aufgetragen wird, wobei die Falzverbindung mindestens einer Wärmebehandlung unterworfen wird,
dadurch gekennzeichnet, daß zumindest die Bördelnaht auf Geliertemperatur erwärmt wird und die Versiegelungsschicht auf die erwärmte Schnittkante aufgetragen wird.

2. Verfahren nach Anspruch 1,
dadurch gekennzeichnet, daß nach dem Auftragen der Versiegelungsschicht die Falzverbindung einer weiteren Wärmebehandlung unterzogen wird.

3. Verfahren nach Anspruch 1,
dadurch gekennzeichnet, daß während des Aufbringens der Versiegelungsschicht die Temperatur an der Auftragsstelle gehalten wird.

4. Verfahren nach einem der Ansprüche 1 bis 3,
dadurch gekennzeichnet, daß beide Wärmezufuhren durch induktive Erwärmung erfolgen.

**Claims**

1. A method of sealing a scarf joint by means of a flange-joint adhesive which can be gelled and/or hardened in the gap by heating and by means of a sealing layer disposed on top of the adhesive and comprising a material which can be gelled and/or hardened by heating and is applied to the cutting edge of the scarf joint, which is subjected to at least one heat treatment, characterised in that at least the flange joint is heated to the gelling temperature and the sealing layer is applied to the heated cutting edge.

2. A method according to claim 1, characterised in that after the sealing layer has been applied, the scarf joint is given additional heat treatment.

3. A method according to claim 1, characterised in that during application of the sealing layer, the temperature is maintained at the place of application.

4. A method according to any of claims 1 to 3, characterised in that both heating operations are by inductive heating.

**Revendications**

1. Procédé pour rendre étanche un assemblage à rainure au moyen d'une colle sur joint à bords bridés gélifiable et/ou durcissable par apport de chaleur, appliquée dans l'intervalle de pliage et d'une couche de colmatage pré-insérée dans celle-ci, qui se compose de matière gélifiable et/ou durcissable par apport de chaleur et qui est appliquée sur l'arête de coupe de l'assemblage à rainure, l'assemblage à rainure étant soumis à au moins un traitement thermique, procédé caractérisé en ce qu'au moins le joint à bord bridé est chauffé à température de gélification et la couche de colmatage est appliquée sur l'arête de coupe chauffée.

2. Procédé selon la revendication 1, caractérisé en ce qu'après l'application de la couche de colmatage l'assemblage à rainure est soumis à un nouveau traitement thermique.

3. Procédé selon la revendication 1, caractérisé en ce que la température est maintenue sur l'emplacement de l'application pendant la mise en place de la couche de colmatage.

4. Procédé selon une des revendications 1 à 3, caractérisé en ce que les deux adductions de chaleur se font par chauffage inductif.